# EUROPÄISCHE PATENTANMELDUNG

(11) **EP 0 699 896 A2**
(43) Veröffentlichungstag der Anmeldung: **06.03.1996**
(21) Anmeldenummer: 95112840.4
(22) Anmeldetag: 16.08.1995
(51) Int. Cl.: G01D 5/34

(54) **Schrittmotor mit Lagesensor**

(30) Priorität: 02.09.1994 DE 4431238
(71) Anmelder: Moto Meter GmbH, D-71229 Leonberg (DE)
(72) Erfinder: Dagenbach, Stefan, Dr. Dr. Ing., D-70771 Leinfelden-Echterdingen (DE); Herzog, Bernhard, Dr. Dr. Ing., D-70619 Stuttgart (DE)
(74) Vertreter: Voss, Klaus, Dipl.-Ing.

(57) **Zusammenfassung**

Erfindungsgemäß wird ein Schrittmotor vorgeschlagen, bei dem ein Lagesensor nicht nur die Anfangsposition der Motorwelle des Schrittmotors bestimmt, sondern auch deren Drehwinkel. Der Lagesensor ist vorzugsweise als Lichtschranke ausgebildet, die eine entsprechende Codescheibe mit Markierungen erfaßt. Die Markierungen auf der Codescheibe sind jedoch nicht periodisch, sondern so angeordnet, daß sie unterschiedlich breite Felder bilden. Durch die Kombination mehrerer unterschiedich breiter Felder innerhalb eines Bereiches ergibt sich eine eindeutige Bestimmung der Lage des Feldes auf der Codescheibe. Diese Lage kann durch Vergleich mit gespeicherten Werten einer Tabelle mittels einer Steuerung bestimmt werden. Durch die unterschiedliche Aneinanderreihung der Felder ist auch eine Richtungsbestimmung möglich. Der erfindungsgemäße Schrittmotor wird vorzugsweise in Anzeigeinstrumenten eingesetzt, die in einem Kraftfahrzeug verwendbar sind.

## Beschreibung

### Stand der Technik

Die Erfindung geht aus von einem Schrittmotor mit einem Lagesensor zur Erfassung des Drehwinkels oder des Drehweges der Motorwelle nach der Gattung des Hauptanspruchs. Es ist schon bekannt, Schrittmotoren beispielsweise zum Antrieb von Zeigerinstrumenten, speziell in Kraftfahrzeugen zu verwenden. Bei einem derartigen Schrittmotor wird zur Bestimmung der Anfangsposition ein Referenzsensor eingesetzt, der einen Bezugspunkt für die Nullstellung des Schrittmotors hat, so daß ein Zeiger beispielsweise auf der Motorwelle immer eine bestimmte Anfangsposition einnimmt. Ein derartiger Referenzsensor ist jedoch nicht geeignet, den Drehwinkel oder den Drehweg des Zeigers zu erfassen. Vielfach wird hierfür ein weiterer Sensor, beispielsweise ein Inkrementalgeber verwendet. Dieser ist jedoch relativ teuer. Des weiteren ergibt sich das Problem, daß ein einkanaliger Inkrementalgeber eine Schwingung des Zeigers mit einer bestimmten Amplitude nicht erkennen kann, so daß die Winkelinformation nicht immer befriedigend ist. Um dieses Problem zu lösen, müßten mehrere Sensoren (mehrkanalige Winkelgeber) verwendet werden. Diese würden jedoch den Schrittmotor noch mehr verteuern.

### Vorteile der Erfindung

Der erfindungsgemäße Schrittmotor mit den kennzeichnenden Merkmalen des Hauptanspruchs hat demgegenüber den Vorteil, daß ein einziger Lagesensor genügt, um sowohl die Anfangsposition der Motorwelle als auch ihren Drehwinkel bzw. Drehweg zu erfassen. Besonders vorteilhaft ist, daß der Lagesensor auch die Drehrichtung erkennen kann. Dadurch wird neben einem einfachen Aufbau bei geringen Kosten auch eine erhöhte Zuverlässigkeit bei der Überwachung der Drehbewegung der Motorwelle erreicht.

Durch die in den abhängigen Ansprüchen aufgeführten Maßnahmen sind vorteilhafte Weiterbildungen und Verbesserungen des im Hauptanspruch angegebenen Schrittmotors möglich. Besonders vorteilhaft ist, daß die Codescheibe Felder aufweist, die vorzugsweise nach einem Dreier-Code aufgeteilt sind. Der Dreier-Code ist sehr einfach aufgebaut und gibt für die unterschiedliche Folge von Hell- und Dunkelfeldern eine ausreichende Anzahl von Variationsmöglichkeiten. Andererseits ist die Breite der Felder relativ groß, so daß diese Felder beispielsweise mit einer einfachen Gabel- oder Reflexlichtschranke zuverlässig abgetastet werden können. Geringfügige Verschmutzungen auf der Codescheibe wirken sich somit auf das Meßergebnis nicht negativ aus.

Weiterhin ist vorteilhaft, daß der Lagesensor durch das Abtasten der unterschiedlich breiten Felder aufgrund der festen Teilung eine binäre Bitfolge abgibt, die für jeden Winkelbereich unterschiedlich ist. Durch Vergleich mit beispielsweise in einer Tabelle gespeicherten Werten für einen bestimmten Winkel kann auf einfache Weise der Drehwinkel bestimmt werden.

Durch Vergleich mit dem elektrischen Phasenwinkel als Sollwert für den Drehwinkel der Motorwelle ist somit auf einfache Weise eine Abweichung vom Istwert feststellbar, so daß die Drehbewegung entsprechend nachgeregelt werden kann.

Durch den einfachen und kleinen Aufbau des Schrittmotors ist die Verwendung als Antrieb in einem Zeigerinstrument besonders günstig. Der Schrittmotor benötigt nicht viel Raum, so daß das Zeigerinstrument relativ flach aufgebaut werden kann.

Eine bevorzugte Anwendung ist in einem Kraftfahrzeug gegeben, bei dem der Schrittmotor zum Antrieb eines Tachometers, eines Drehzahlmessers, einer Tankanzeige, einer Temperaturanzeige u.a. verwendbar ist.

### Zeichnung

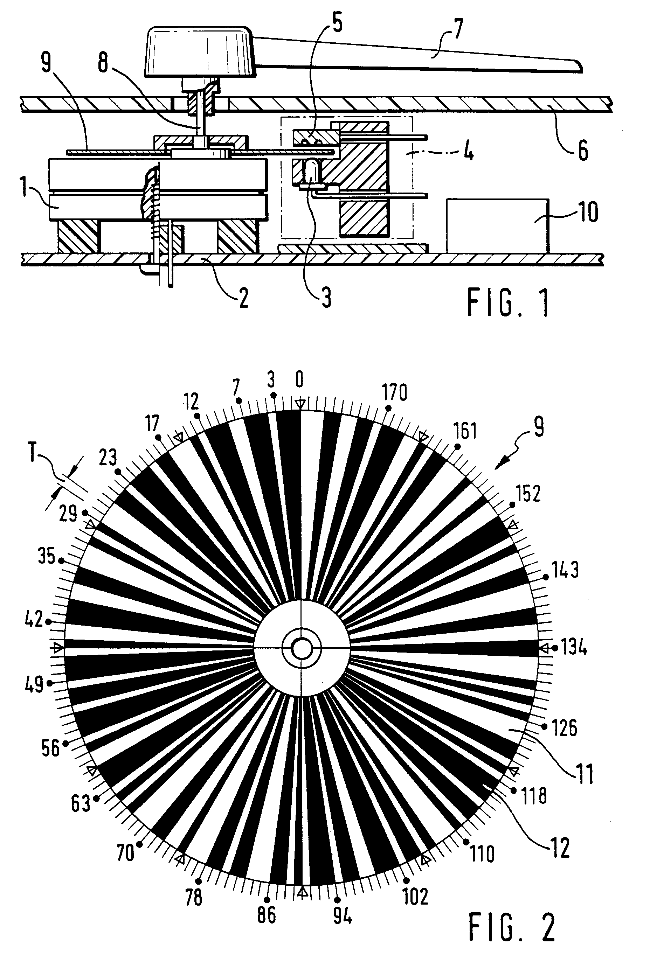

Ein Ausführungsbeispiel der Erfindung ist in der Zeichnung dargestellt und in der nachfolgenden Beschreibung näher erläutert. Es zeigen Figur 1 ein Schnittbild eines Anzeigeinstrumentes und Figur 2 zeigt eine Codescheibe.

### Beschreibung des Ausführungsbeispiels

Figur 1 zeigt einen Schrittmotor 1, der in einem Anzeigeinstrument eingebaut ist. Schrittmotoren sind per se in vielfältiger Bauweise bekannt. Ihre Funktion muß daher nicht näher beschrieben werden. Der Schrittmotor 1 hat eine drehbare Antriebswelle 8, auf der ein Zeiger 7 angeordnet ist. Der Zeiger 7 überstreicht dabei ein Zifferblatt 6, auf dem der dargestellte Wert ablesbar ist. Unterhalb des Zifferblattes 6 ist eine kreisförmige Codescheibe 9 angeordnet, die im Zentrum mit der Motorwelle 8 fest verbunden ist. Die Codescheibe 9 ist einem feststehenden Lagesensor zugeordnet, der einen Sender 3 und einen Empfänger 5 hat. Der Lagesensor 4 ist beispielsweise als Gabellichtschranke ausgebildet. Alternativ sind auch Reflexlichtschranken oder elektromagnetische Sensoren verwendbar, wenn die Codescheibe 9 entsprechend angepaßt ist. Der Lagesensor 4 ist dabei so ausgebildet, daß er die Markierungen der Codescheibe 9 erfaßt und entsprechende elektrische Signale in Form einer binären Bitfolge an eine Steuerung 10 abgibt. Die einzelnen Baugruppen (Schrittmotor, Lagesensor, Steuerung) sind auf einem Träger 2 angeordnet, der vorzugsweise als Printplatte ausgebildet ist und die notwendigen elektrischen Leitungen zu den einzelnen Baugruppen enthält. Die einzelnen Baugruppen sind per se bekannt und müssen daher nicht näher beschrieben werden. Die Steuerung 10 enthält beispielsweise einen Mikrorechner, der die von dem Lagesensor 4 gesendete Bitfolge decodiert und mit in einer Tabelle abgelegeten Daten vergleicht, um daraus einen Soll-/Istvergleich für den Drehwinkel der Motorwelle 8 zu ermitteln. Des weiteren enthält die Steuerung 10 einen Steueralgorithmus, der zur Ansteuerung des Schrittmotors 1 dient. Ein derartiger Steueralgorithmus ist dem Fachmann bekannt und muß daher nicht im einzelnen beschrieben werden.

Die Codescheibe 9 kann auch als Trommel oder Zylinder ausgebildet sein, auf dessen Außenwand die Codierung aufgebracht ist. Wird ein Reduziergetriebe verwendet, dann wird die Codescheibe 9 an einer geeigneten Stelle, vorzugsweise mit der Abtriebswelle des Getriebes verbunden.

Figur 2 zeigt ein erfindungsgemäßes Ausführungsbeispiel der Codescheibe 9. Die Codescheibe 9 hat beispielsweise eine 2-Grad-Teilung T, so daß dadurch maximal 180 Teilfelder gebildet werden können. Es sind jeweils helle Felder 11 und dunkle Felder 12 vorgesehen. Die hellen Felder können bei Verwendung einer Gabellichtschranke transparent sein, so daß für diese Felder der Lichtstrahl des Sensors 3 durch das helle Feld 11 durchscheint und vom Empfänger 5 empfangen wird. Das dunkle Feld 12 ist dagegen nicht durchscheinend. Empfänger 5 wird bei Drehung der Codescheibe 9 somit im Rhythmus der Codierung entsprechende '0'- und '1'-Signale an die Steuerung 10 abgeben.

Sowohl die hellen Felder 11 als auch die dunklen Felder 12 sind unterschiedlich breit ausgebildet, wobei ihre Breite nicht periodisch ausgebildet ist. Die geringste Breite eines Feldes 11, 12 entspricht der Teilung T. Bei dem verwendeten '3'-Code kann ein Feld 11, 12 maximal die dreifache Teilung T einnehmen. Die einzelnen Felder sind noch hinreichend breit genug, um sie mit einer einfachen Gabellichtschranke eindeutig zu identifizieren. Bei kontinuierlicher Drehung der Codescheibe 9 mit konstanter Geschwindigkeit oder Triggerierung nach jeder Teilung T ergibt sich nun beispielsweise bei einem transparenten Feld 11 mit einer einfachen Teilung T ein logisches '1'-Signal. Bei einem transparenten Feld mit doppelter Teilung ergibt sich ein '11'-Signal und bei einem dreifachen Feld 11 ein '111'-Signal. Die dunklen Felder 12 sind entsprechend mit einfacher, doppelter und dreifacher Teilung aufgebaut. Bei Erkennung eines dunklen Feldes 12 gibt der Empfänger 5 ein entsprechendes '0'-Signal bzw. ein doppeltes oder dreifaches '000'-Signal an die Steuerung 10.

Alternativ ist vorgesehen, auch höherwertige Codes zu verwenden, wenn eine höhere Auflösung bzw. Genauigkeit für die Codescheibe 9 gefordert wird. Durch den höherwertigen Code kann eine noch differenziertere Feldeinteilung durchgeführt werden und dadurch die Genauigkeit der Codescheibe vergrößert werden.

Im folgenden wird die Funktionsweise dieser Anordnung näher erläutert. Gemäß der Figur 2 zeigt die Codescheibe 9 eine 2-Grad-Teilung T gegen den Uhrzeigersinn von 0 bis 180. Das erste dunkle Feld 12 hat eine dreifache Teilung entsprechend einem Winkel von 6°. Der Empfänger 5 würde somit ein '000'-Signal abgeben, wenn er nach jeder Teilung getaktet wird. Danach schließt sich ein helles Feld 11 an mit einer einfachen Teilung, so daß der Empfänger 5 ein '1'-Signal an die Steuerung 10 abgibt. Danach folgt wiederum ein helles Feld 11 mit einer doppelten Teilung und anschließend ein dunkles Feld 12 mit einer dreifachen Teilung usw. Die Pulsfolge für den Drehwinkel in Gegenuhrzeigerrichtung von insgesamt 24° wäre demnach 000100011000.

Insgesamt sind die Felder aperiodisch angeordnet, d. h. es gibt keine periodische Wiederholung einer Feldersequenz.

Am äußeren Rand der Codescheibe 9 sind einige Teilungen mit einem Punkt und einer Kennziffer beispielsweise 3, 7,12, 17, 23, 29 bis 170 gekennzeichnet. Diese Punkte stellen Kennzeichen für die einzelnen Bitfolgen dar. Jedesmal, wenn ein dreifaches helles oder dunkles Feld 11, 12 abgelaufen ist, ist eine Bitfolge beendet. Das dreifache Feld 11, 12 dient somit als Endezeichen für die Bitfolge oder als Trennzeichen zwischen zwei einzelnen Bitfolgen. Alternativ können auch andere Zeichenfolgen als Trennzeichen verwendet werden. Auf diese Weise kann eindeutig zwischen zwei Bitfolgen unterschieden werden, da innerhalb einer Bitfolge nie mehr als zwei gleiche 3er-Bits aufeinanderfolgen. So ist die erste Bitfolge bei der Markierung 3 am Ende des ersten schwarzen Feldes 12 erreicht. Die Markierung 7 begrenzt die zweite Bitfolge '1000' ebenfalls am Ende des schwarzen Feldes 12. Die dritte Bitfolge geht bis zur Markierung 12 und ist ebenfalls durch ein schwarzes Feld bestimmt. Bei der Markierung 29 ist dagegen die Bitfolge durch ein helles Feld begrenzt.

Jede Bitfolge stellt somit Winkelbereiche dar, die durch ihre relative Lage auf der Codescheibe 9 festgelegt sind. Wird diese Lage beispielsweise in einer Codetabelle gespeichert, dann kann ein Rechner aufgrund der Bitfolge den Drehwinkel bis zur Bitfolge und dem entsprechenden Feld genau bestimmen. Dazu werden die Winkelschritte der Steuerung, z. B. 1/12 Grad , schrittweise bei jedem Zyklus aufaddiert und dieser Summenwert mit dem aus der Codescheibe abgeleiteten Signal für den Drehwinkel verglichen. Innerhalb der Bitfolge kann die Auflösung minimal drei Teilungen, also maximal 6° betragen. Ein unzulässiger Stillstand des Motors wird somit nach maximal 6° erkannt.

Aus der Codescheibe 9 ergibt sich weiter, daß der erforderliche Weg für eine Anfangspositionierung maximal 26° in eine erste Richtung beträgt, danach ist sie minimal 8° oder maximal 26° in die andere Richtung.

Die Erkennung eines einzelnen Schrittverlustes ist abhängig von der Abstimmung von Schritteilung zur Teilung T. In der Regel wird der Schrittverlust nach maximal 6° erkannt.

Wie der Figur 2 weiter entnehmbar ist, können die Felder für eine Bitfolge unterschiedlich viele dunkle und helle Felder haben. Die erste Bitfolge bis zur Markierung 3 hat nur ein dunkles Feld. Die zweite Bitfolge zwischen der Markierung 3 und 7 hat dagegen zwei Felder. Ebenso hat die nächste Bitfolge zwei Felder. Die nachfolgende Bitfolge zwischen der Markierung 12 und 17 hat dagegen zwei helle und ein dunkles Feld 11, 12. Beispielsweise hat die Bitfolge zwischen den Markierungen 152 und 161 drei helle und zwei dunkle Felder 11, 12, also insgesamt fünf Felder. Aufgrund dieser unterschiedlichen Anzahlen von Feldern innerhalb einer Bitfolge ist auch die Auflösung für die Bestimmung der Zeigerposition unterschiedlich. Bereiche mit einer größeren Felderzahl ergeben somit einen größeren Drehwinkel für die Erkennung von Schrittverlusten als Bereiche mit einer geringeren Felderzahl.

Die praktische Auswertung der Signale geschieht zweckmäßigerweise in dem Mikrorechner, der auch den Schrittmotor ansteuert, nach folgendem Verfahren: Immer beim Durchfahren eines Schrittmotor-Ansteuerwinkels,welcher der Mitte einer Teilung der Codescheibe entspricht, wird der Istwert der Codescheibe (hell/dunkel bzw. high/low) abgefragt und mit der Tabelle verglichen, welche die Sollwerte enthält.

Alternativ oder zusätzlich kann die Position der Übergänge hell/dunkel auf der Basis des Schrittmotor-Ansteuerwinkels genauer erfaßt und dazu verwendet werden, systematische Fehler zu erkennen und ggf. zu korrigieren. Beispiele für solche systematischen Fehler sind eine exzentrische Montage der Codescheibe oder Verschiebungen der Hell-Dunkel-Übergänge aufgrund von Streuungen und Drifts der Empfindlichkeit von Lichtschranke und Auswerteschaltung.

Bei Auftreten eines Fehlers wird eine spezielle Schrittmotor-Ansteuer-Routine aktiviert, welche solange die Codescheibe kontinuierlich abtastet, bis die abgetastete Bitfolge eine Rekonstruktion des Istwinkels erlaubt. Danach wird wieder die ursprüngliche Routine aktiviert.

## Patentansprüche

1. Schrittmotor mit einem Lagesensor zur Erfassung des Drehwinkels oder des Drehweges der Motorwelle bzw. eine davon abgeleitete Bewegung, wobei der Lagesensor eine Codescheibe mit Markierungen aufweist, die mit einer vorgegebenen Teilung aufgebracht sind, daß die Markierungen von einem Lagesensor erkennbar sind, und mit einer Steuerung zur Auswertung der erkannten Markierungen, dadurch gekennzeichnet, daß die Codescheibe (9) eine regelmäßige Teilung (T) aufweist, wobei die Markierungen als unterscheidbare Felder (11, 12) ausgebildet sind, daß die Breite eines Feldes (11, 12) wenigstens der Teilung (T) entspricht und daß die Breite nachfolgender Felder (11, 12) innerhalb eines Erkennungsbereiches eine aperiodische Folge aufweist.

2. Schrittmotor nach Anspruch 1, dadurch gekennzeichnet, daß die Felder (11, 12) vorzugsweise nach einem Dreier-Code aufgeteilt sind.

3. Schrittmotor nach Anspruch 1 oder 2, dadurch gekennzeichnet, daß die Teilung (T) am abgetasteten Umfang vorzugsweise einen Winkel von 2° oder einen Bogen zwischen 0,2 mm und 1,0 mm aufweist.

4. Schrittmotor nach einem der vorhergehenden Ansprüche, dadurch gekennzeichnet, daß die Felder (11, 12) hell und dunkel bzw. lichtdurchlässig/lichtabsorbierend sind und jeweils einem hellen Feld (11) ein dunkles Feld (12) folgt.

5. Schrittmotor nach einem der vorhergehenden Ansprüche, dadurch gekennzeichnet, daß der Lagesensor (4) einen Sender (3) und einen Empfänger (5) aufweist und vorzugsweise als Lichtschranke ausgebildet ist, die die Felder (11, 12) abtastet und ein der Art eines Feldes (11, 12) entsprechendes digitales Signal als Bitfolge an eine Steuerung (10) abgibt.

6. Schrittmotor nach Anspruch 6, dadurch gekennzeichnet, daß die Steuerung (10) ausgebildet ist, aus der Bitfolge den absoluten Drehwinkel der Codescheibe (9) zu bestimmen.

7. Schrittmotor nach einem der vorhergehenden Ansprüche, dadurch gekennzeichnet, daß zur Winkelbestimmung die aufaddierten Winkelschritte der Steuerung (10) mit dem aus der Codescheibe (9) abgeleiteten Signal vergleichbar sind.

8. Schrittmotor nach einem der vorhergehenden Ansprüche, dadurch gekennzeichnet, daß der Schrittmotor (1) für ein Zeigerinstrument verwendbar ist.

9. Schrittmotor nach einem der vorhergehenden Ansprüche, dadurch gekennzeichnet, daß dem Schrittmotor ein Reduziergetriebe nachgeschaltet ist und daß die Codescheibe (9) an einer geeigneten Stelle mit dem Reduziergetriebe, vorzugsweise mit dessen Abtriebswelle verbunden ist.

10. Schrittmotor nach einem der vorhergehenden Ansprüche, dadurch gekennzeichnet, daß der Schrittmotor in einem Kraftfahrzeug verwendbar ist.
